# EUROPEAN PATENT APPLICATION

(11) **EP 2 472 383 A2**
(43) Date of publication of application: **04.07.2012**
(21) Application number: 11193373.5
(22) Date of filing: 13.12.2011
(51) Int. Cl.: G06F 3/048

(54) **Method for inputting memo in touch screen terminal and device thereof**

(30) Priority: 29.12.2010 KR 20100137722
(71) Applicant: Samsung Electronics Co., Ltd., Suwon-si, Gyeonggi-do (KR)
(72) Inventor: Kwon, Woo-Up, Seoul (KR)
(74) Representative: Jenkins, Richard Gavin

(57) **Abstract**

A method inputs a memo in a touch screen terminal. The method includes determining whether a memo function is requested while displaying contents of a specific function on a screen, upon receiving the request of the memo function, displaying a memo window that is transparently or translucently overlaid on the screen on which the contents of the specific function are displayed and that supports free drawing, and detecting an input of the contents onto the memo window and storing the contents displayed on the screen upon receiving a request for storing the contents at a later time.

## Description

### TECHNICAL FIELD OF THE INVENTION

The present invention relates to a touch screen terminal. More particularly, the present invention relates to a method and apparatus for inputting a memo on a screen currently displayed to perform a specific function without having to change the screen.

### BACKGROUND OF THE INVENTION

With the development of electronics communication industries in recent years, an electronic apparatus such as a mobile communication terminal (or a cellular phone, an electronics organizer, a Personal Digital Assistant (PDA), etc., has become a necessity of modem life. As well known, the portable terminal recently employs a touch screen for generating an input when a screen is touched. The touch screen is a screen equipped with an input device to receive an input of a location of a contact position when the screen is touched by a finger. The touch screen satisfies users due to its convenience of use.

The portable terminal provides a memo function. In general, when the memo function is executed, the conventional portable terminal changes a currently displayed screen to a memo input screen, and the user may input a memo on the memo input screen. For example, when the user wants to input a memo upon discovering important contents while browsing a webpage, the user closes the current webpage to execute a memo function, and then inputs the memo on a displayed memo input screen. In this example, if the user does not correctly remember the contents to be input as the memo, the user has to inconveniently browse the previous webpage again. Further, the conventional portable terminal uses a keypad implemented on a touch screen or other extra keys as an input tool, and this may be not a user friendly manner for those who prefer to handwrite a memo on an actual sheet of paper. Furthermore, since a keypad occupies a large area in the memo input screen of the conventional touch screen, an input range is limited to that extent.

### SUMMARY OF THE INVENTION

To address the above-discussed deficiencies of the prior art, it is a primary aspect of the present disclosure to solve at least the above-mentioned problems and/or disadvantages and to provide at least the advantages described below. Accordingly, an aspect of the present disclosure is to provide a method and apparatus for inputting a memo in a touch screen terminal capable of inputting the memo while reading contents displayed by a specific function.

Another aspect of the present disclosure is to provide a method and apparatus for inputting a memo in a touch screen terminal which allows the memo to be input promptly in such a manner that the memo may be input on a screen displayed by a currently executed function without having to change the current screen to a new memo input screen when memo input is requested.

Another aspect of the present disclosure is to provide a method and apparatus for inputting a memo in a touch screen terminal in a user friendly manner by allowing a user to handwrite the memo as if the user writes the memo in real life.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 illustrates a block diagram for a structure of a touch screen terminal according to an exemplary embodiment of the present disclosure;

FIG. 2 illustrates a flowchart for a method of inputting a memo in a touch screen terminal according to an exemplary embodiment of the present disclosure;

FIG. 3 illustrates a screen for inputting a memo in a touch screen terminal according to an exemplary embodiment of the present disclosure;

FIG. 4A and FIG. 4B illustrate a screen on which memos stored in different manners in the exemplary embodiment of FIG. 3 are displayed;

FIG. 5A illustrates an operation of zooming in or out contents displayed on a screen after executing a memo function according to an exemplary embodiment of the present disclosure;

FIG. 5B illustrates a screen for showing a result obtained by performing the operation of FIG. 5A according to an exemplary embodiment of the present disclosure;

FIG. 6A illustrates a flowchart for a process of inputting a memo during a call according to an exemplary embodiment of the present disclosure; and

FIG. 6B illustrates a screen for inputting a memo during a call according to an exemplary embodiment of the present disclosure.

### DETAILED DESCRIPTION OF EXEMPLARY EMBODIMENTS

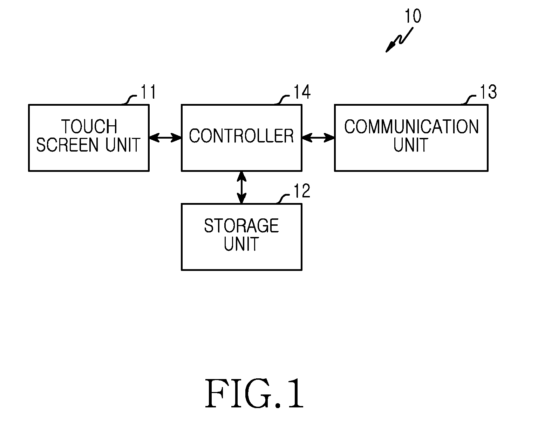

FIGURES 1 through 6B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. Preferred embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on a users or operator's intention and usage. That is, the terms used herein must be understood based on the descriptions made herein.

The present disclosure provides a method and apparatus for inputting a memo in a touch screen terminal in such a manner that the memo may be input on a screen displayed by a currently executed function without having to change the current screen to a new memo input screen when memo input is requested.

FIG. 1 illustrates a block diagram for a structure of a touch screen terminal 10 according to an exemplary embodiment of the present disclosure.

Referring to FIG. 1, the touch screen terminal 10 includes a touch screen unit 11 for input and output operations, a storage unit 12 for storing data, a communication unit 13 for communication, and a controller 14 for controlling overall operations of the touch screen terminal 10.

The touch screen unit 11 outputs an input signal based on a touch operation to the controller 14, and receives and displays data corresponding to the input signal under the control of the controller 14.

The storage unit 12 stores a specific program for controlling the overall operations of the touch screen terminal 10 and a variety of data that is input and output when executing a control operation of the touch screen terminal 10. The storage unit 12 stores a memo which is written according to the exemplary embodiment of the present disclosure.

The controller 14 provides overall control to the touch screen terminal 10. A memo input method of the controller 14 will be described below in detail with reference to the accompanying drawings according to an exemplary embodiment of the present disclosure.

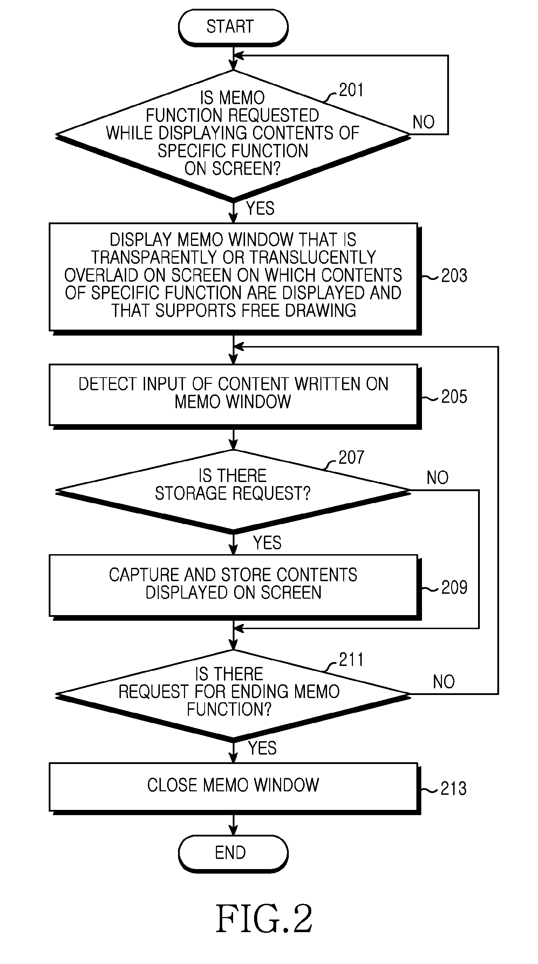

FIG. 2 is a flowchart illustrating a method of inputting a memo in a touch screen terminal according to an exemplary embodiment of the present disclosure.

Referring to FIG. 2, the controller 14 determines whether a memo function is requested while displaying contents of a specific function on a screen in step 201.

Upon detecting the request of the memo function, the controller 14 displays a memo window that is transparently or translucently overlaid on the screen on which the contents of the specific function are displayed and that supports free drawing in step 203. Therefore, a user may freely draw a memo on the memo window while reading the contents of the specific function. The specific function may be a call function, a webpage function, an e-book function, a game function, etc. The specific function displays the contents onto the screen. For example, the e-book function displays e-book contents (e.g., novels, magazines, etc.) and related buttons.

Thereafter, the controller 14 detects an input of contents written on the memo window in step 205. That is, the user draws a text, picture, table, chart, or the like on the memo window as if the user writes a memo on a sheet of paper. In this example, the controller 14 may detect the memo input and temporarily store the memo.

Thereafter, the controller 14 determines whether there is a storage request in step 207.

Upon receiving the storage request, the controller 14 captures the contents displayed on the screen and then stores the captured image into the memory 22 in step 209. In this example, the contents displayed on the screen may be stored by capturing both contents of a previously executed function and contents written on an overlaid memo window. However, the present disclosure is not limited thereto, and thus the controller 14 may capture only contents of the memo window on which the written memo is drawn and then store the capture contents into the memory 22. The controller 14 may store the contents as image data or run-length data.

Thereafter, the controller 14 determines whether there is a request for ending the memo function in step 211. Upon receiving the memo function end request, the controller 14 closes the memo window and ends the memo function in step 213. If there is no request for ending the memo function, the controller 14 may confirm updating of a previously written memo through step 205 and the subsequent steps, or may confirm a new memo input and then store the new memo input at a later time.

If the controller 14 determines in step 207 that there is the request for ending the memo function instead of receiving the storing request, the controller 14 ignores the contents written on the memo window and closes the memo window.

Further, a step in which the controller 14 determines whether there is a request for zooming in or out the screen may be further provided between any steps of steps 203 to 211. For example, when the screen is zoomed out, the contents displayed by the specific function and the contents written on the memo window are zoomed out altogether. The contents which are zoomed out on the screen may be stored after being captured in a miniaturized form.

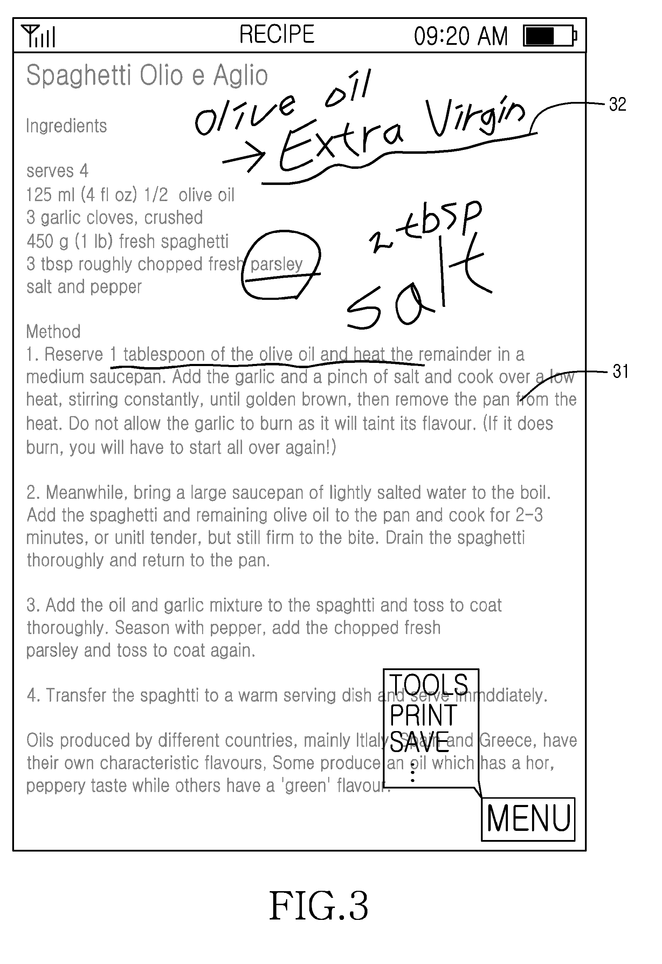

FIG. 3 illustrates a screen for inputting a memo in a touch screen terminal according to an exemplary embodiment of the present disclosure.

For example, an e-book function is executed to display e-book contents 31. When a memo function is requested while displaying the e-book contents 31, a memo window is displayed. The memo window is transparently or translucently overlaid on the e-book contents 31 and supports free drawing. The memo function may have a tool key for providing a tool that supports the free drawing, and may also have a print key, a load key, a save key, and close key. For example, the user may load a previously written memo and may edit the memo by using a suitable tool.

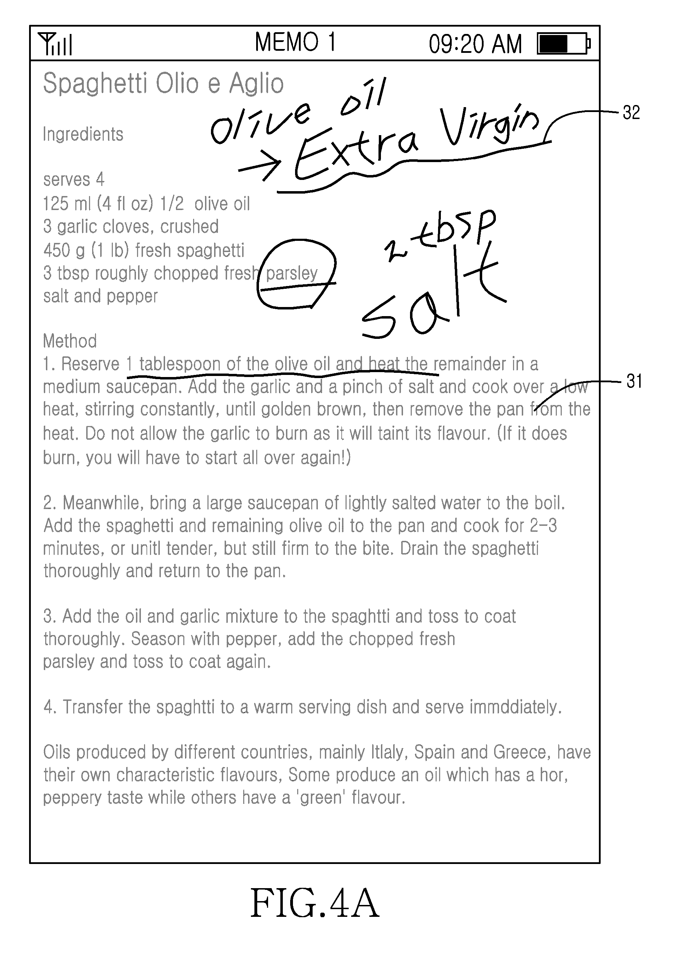

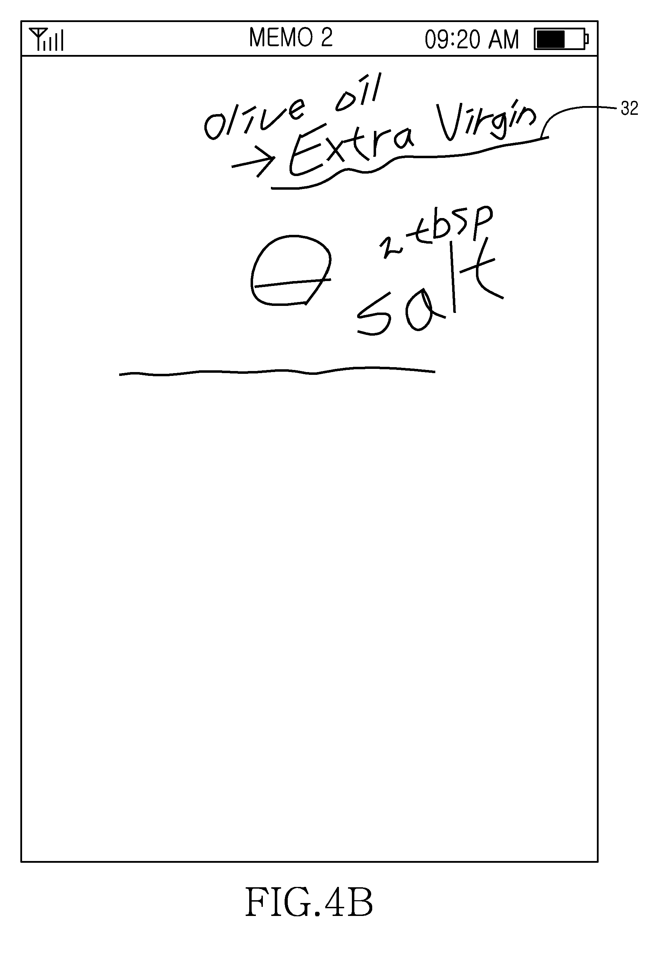

FIG. 4A and FIG. 4B illustrate a screen on which memos stored in different manners in the exemplary embodiment of FIG. 3 are displayed.

Referring to FIG. 4A, all contents displayed on the screen, that is, e-book contents 31 and contents written on a memo window 32 are captured altogether and stored as an image, and the stored image is output as illustrated.

Referring to FIG. 4B, when a memo is stored by using a run-length scheme, only contents written on a memo window 32 may be input as illustrated.

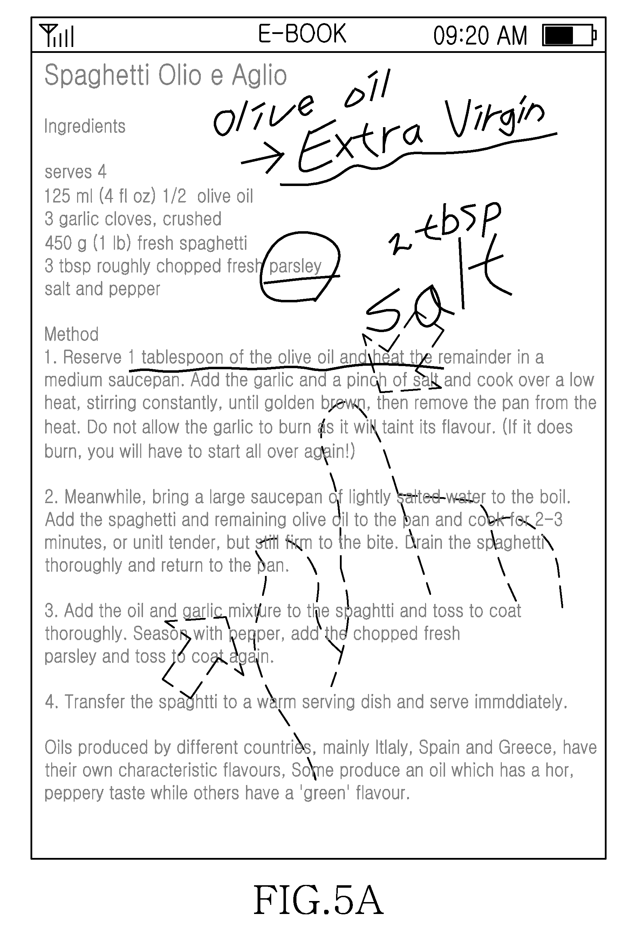

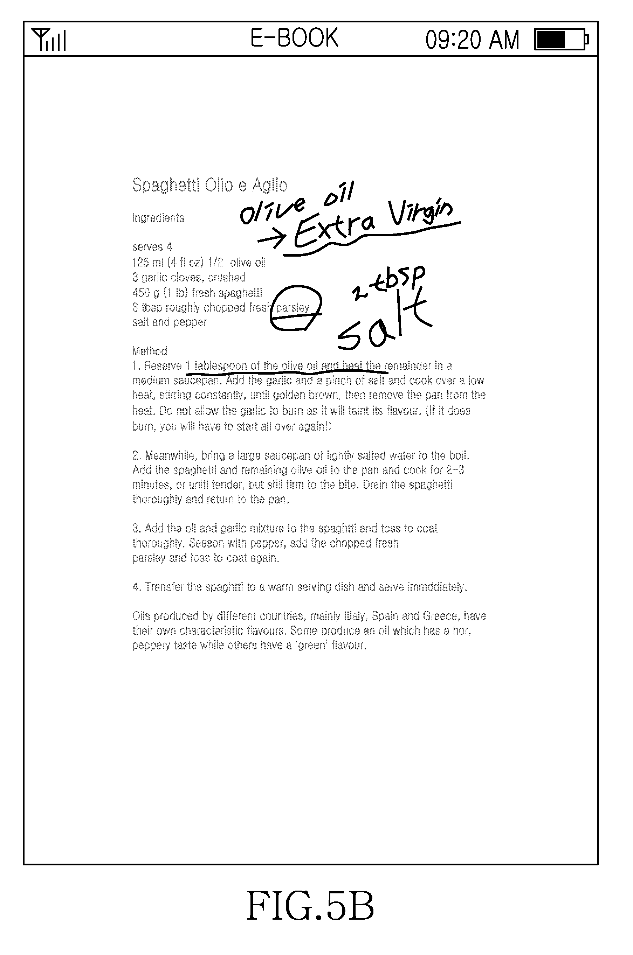

FIG. 5A illustrates an operation of zooming in or out contents displayed on a screen after executing a memo function according to an exemplary embodiment of the present disclosure. FIG. 5B illustrates a screen for showing a result obtained by performing the operation of FIG. 5A.

Referring to FIG. 5A and FIG. 5B, the contents displayed on the screen may be zoomed in or out according to a normal multi-touch scheme. For example, to zoom out the contents displayed on the screen, a user may decrease a distance between two touch points by bringing two fingers to a close distance.

In particular, it should be noted that not only contents written on a memo window but also contents of a specific function are zoomed in or out altogether. The contents may be stored in a state of being zoomed in or out.

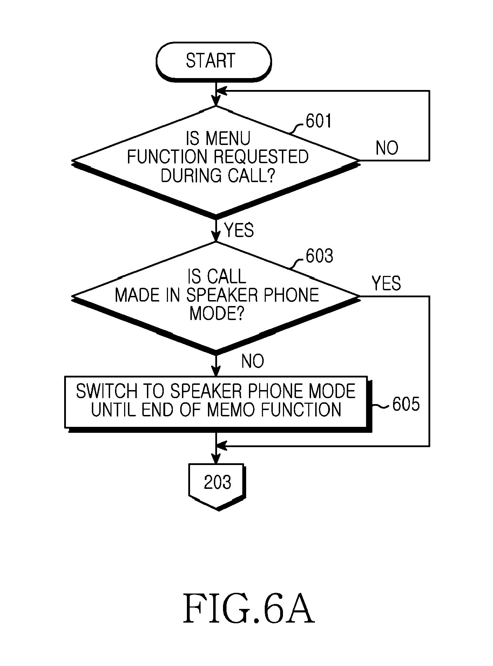

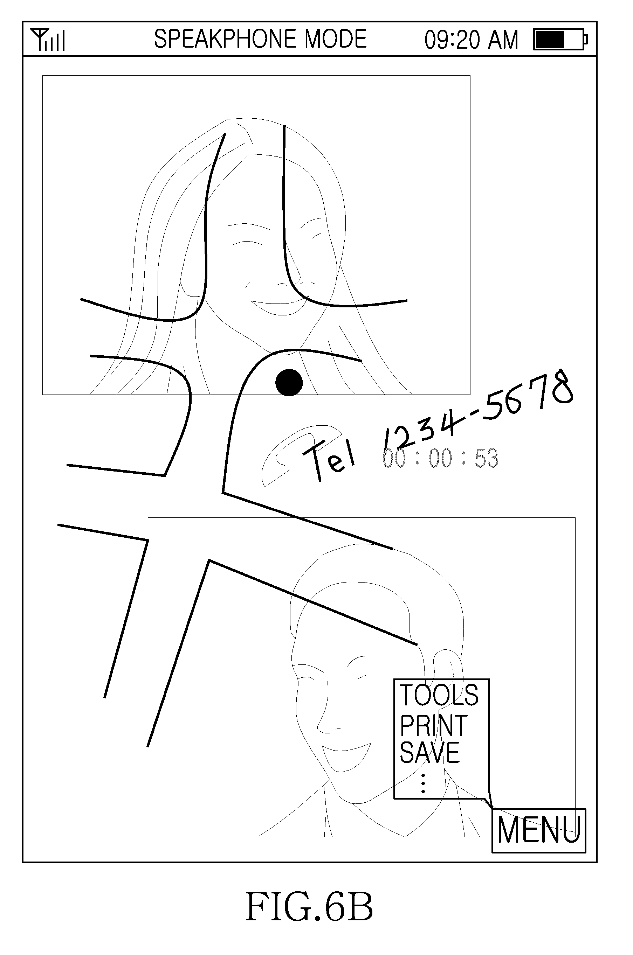

FIG. 6A illustrates a flowchart for a process of inputting a memo during a call according to an exemplary embodiment of the present disclosure. FIG. 6B illustrates a screen for inputting a memo during a call.

Referring to FIG. 6A, the controller 14 determines whether a memo function is requested during a call in step 601.

Upon receiving the request of the memo function during the call, the controller 14 determines whether the call is made in a speaker phone mode in step 603.

If the call is made in a normal mode, the controller 14 switches to the speaker phone mode in step 605. The speaker phone mode enables the call even if a user does not bring a mobile terminal to a close distance to a face of the user unlike in a normal mode.

Thereafter, the subsequent steps of step 203 of FIG. 2 are performed.

Referring to FIG. 6B, when the user needs to write a memo while operating in the normal mode, that is, while talking to a recipient via a phone by brining the terminal close to a mouth and an ear, the user executes the memo function and the terminal automatically switches to the speaker phone mode. Thereafter, the user may write a memo while viewing contents displayed by a call function according to the aforementioned method.

In conclusion, the present disclosure provides a method and apparatus for inputting a memo in a touch screen terminal in such a manner that a user may handwrite a memo on contents displayed on a screen by using a specific function without having to change the screen, thereby providing the user with a fast, convenient, and user-friendly environment.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of inputting a memo in a touch screen terminal [10], the method comprising:
determining whether a memo function is requested while displaying contents of a specific function on a screen [201];
upon receiving a request of the memo function, displaying a memo window that is transparently or translucently overlaid on the screen on which the contents of the specific function are displayed and that supports free drawing [203]; and
detecting an input of the contents onto the memo window and storing the input of the contents onto the memo window upon receiving a request for storing [209].

2. The method of claim 1, further comprising upon receiving a request for ending the memo function [211], closing the memo window and ending the memo function [213].

3. The method of claim 1, further comprising zooming in or out the contents of the specific function together with the contents of the memo window upon receiving a request for zooming in or out the contents after displaying the memo window.

4. The method of claim 1, wherein upon receiving the request of the memo function, a speaker phone mode is used in a call until the memo function ends [605].

5. The method of claim 1, wherein detecting of the input of the contents onto the memo window and storing the input of the contents onto the memo window upon receiving the request for storing comprises:
storing the contents of the specific function displayed on the screen and the contents input onto on the memo window together or only the contents displayed on the memo window [209].

6. The method of claim 1, wherein the contents displayed on the screen are stored as image data or run-length data.

7. The method of claim 1 further comprising:
responsive to identifying that the request of the memo function is received during a call, determining whether the call is made in a speaker phone mode;
responsive to determining that the call is not made in the speaker phone mode, switching to the speaker phone mode.

8. An apparatus configured to inputting a memo in a touch screen terminal, the apparatus comprising:
a controller [14] configured to display a memo window that is transparently or translucently overlaid on a screen [11] on which contents of a specific function [31] are displayed and supports free drawing upon receiving a request of a memo function while displaying contents of the specific function on the screen, and detect an input of contents onto the memo window [32] and storing the input of the contents displayed onto the memo window the screen upon receiving a request for storing.

9. The apparatus of claim 8, wherein the controller is further configured to close the memo window and end the memo function upon receiving a request for ending the memo function.

10. The apparatus of claim 8, wherein the controller is further configured to zoom in or out the contents of the specific function together with the contents of the memo window upon receiving a request for zooming in or out the contents after displaying the memo window.

11. The apparatus of claim 8, wherein the controller is further configured to allow a speaker phone mode to be used in a call until the memo function ends upon receiving the request of the memo function.

12. The apparatus of claim 8, wherein the controller is further configured to store the contents of the specific function displayed on the screen and the contents input onto the memo window together or only the contents displayed on the memo window.

13. The apparatus of claim 8, wherein the controller is further configured to store the contents displayed on the screen as image data or run-length data.

14. The apparatus of claim 8, wherein the controller is further configured to determine, responsive to identifying that the request of the memo function is received during a call, whether the call is made in a speaker phone mode, and switch, responsive to determining that the call is not made in the speaker phone mode, to the speaker phone mode.
